# EUROPÄISCHE PATENTSCHRIFT

(11) **EP 2 571 711 B1**
(45) Veröffentlichungstag und Bekanntmachung des Hinweises auf die Patenterteilung: **17.12.2014**
(21) Anmeldenummer: 11721285.2
(22) Anmeldetag: 16.05.2011
(51) Int. Cl.: B60K 20/06

(54) **KRAFTFAHRZEUG**
MOTOR VEHICLE
VÉHICULE À MOTEUR

(30) Priorität: 20.05.2010 DE 102010029183
(43) Veröffentlichungstag der Anmeldung: 27.03.2013
(73) Patentinhaber: Bayerische Motoren Werke Aktiengesellschaft, 80809 München (DE)
(72) Erfinder: KNOLL, Christian, 80807 München (DE); HUDELMAIER, Joerg, 80636 Muenchen (DE); FRANCO LUIS, Andre, 81825 München (DE); KALUS, Sascha, 81377 München (DE)
(74) Vertreter: Mayer-Martin, Christian
(86) Internationale Anmeldenummer: PCT/EP2011/057824
(87) Internationale Veröffentlichungsnummer: WO 2011/144547

(56) Entgegenhaltungen:
- EP-A1- 1 362 734
- GB-A- 2 361 104
- US-B1- 6 295 887

## Beschreibung

Die Erfindung betrifft ein Kraftfahrzeug mit einem Gangwahlschalter.

Herkömmliche Gangwahlschalter (GWS) für Automatikgetriebe existieren im Wesentlichen in zwei unterschiedlichen Ausprägungen: Als Hebel im Mittelkonsolenbereich oder als Lenkstockhebel. Beide Varianten sind auch als monostabile Hebel ausgeführt, bei denen der Hebel nach Betätigung der Fahrstufenwahl selbstständig in seine Ausgangslage zurück springt.

Neuere Fahrzeuge sind mit einem drehbaren Gangwahlschalter ausgestattet, der entweder im Mittelkonsolenbereich oder im Centerstackbereich angeordnet ist.

Wesentliches Merkmal aller heutigen Gangwahlschalter ist, dass das Einlegen des Rückwärtsgangs durch eine Bewegung nach vorne (Gangwahlschalter in der Mittelkonsole) bzw. nach oben (Gangwahlschalter als Lenkstockhebel, rechts hinter dem Lenkrad liegend) und die Fahrstufe D durch eine Bewegung nach hinten (Gangwahlschalter in der Mittelkonsole) bzw. nach unten (Gangwahlschalter als Lenkstockhebel, rechts hinter dem Lenkrad liegend) erfolgt.

Zumindest bei Gangwahlschaltern in einer Ausführung als Hebel im Mittelkonsolenbereich existieren keine gesetzlichen Vorschriften, die eine derartige Anordnung der Gangstufen vorschreiben. Aus historischen und damit einhergehenden Gründen der Funktionssicherheit wird - insbesondere im Hinblick auf den US-amerikanischen Markt - an dieser Anordnung fest gehalten.

Die Nachteile heutiger Gangwahlschalter liegen in der Nicht-Übereinstimmung der Betätigungsrichtung der Fahrstufen am Stellteil und deren Anzeige dort und der damit ausgelösten Fahrtrichtung des Fahrzeugs. Da sich diese Richtungen bei heutigen Fahrzeugen widersprechen, sind heutige Gangwahlschalter nur sehr bedingt schlüssig im Erstkontakt. Auch in Stresssituationen kommt es daher immer wieder zu Fehlbedienungen.

Bei drehbaren Gangwahlschaltern liegen die Nachteile aufgrund dessen, dass diese nicht monostabil ausgeführt sind, vor allem darin, dass die Gangwahl sehr bewusst und zumeist mit Blickkontakt durchgeführt werden muss, was ein schnelles Rangieren des Fahrzeugs erschwert.

Ein weiterer Nachteil gängiger Gangwahlschalter ist der enorme Platzbedarf, den, mit Ausnahme der Lenkstockhebelvariante, alle sonstigen Varianten im Mittelkonsolen- oder Centerstackbereich des Fahrzeugs in Anspruch nehmen.

Ein gattungsgemäßes Kraftfahrzeug ist aus der EP1362734 A bekannt.

Der Erfindung liegt nun die Aufgabe zu Grunde, ein Kraftfahrzeug anzugeben, bei dem der Gangwahlschalter intuitiv bedienbar ist.

Diese Aufgabe wird durch die Merkmale des unabhängigen Anspruchs 1 gelöst. Vorteilhafte Weiterbildungen der Erfindung sind den abhängigen Ansprüchen zu entnehmen.

Ein erfindungsgemäßes Kraftfahrzeug, das beispielsweise durch einen Verbrennungsmotor und/oder einen Elektromotor angetrieben wird, weist einen durch die Lenksäule (Lenkstock), insbesondere die Lenksäulenverkleidung, mittelbar oder unmittelbar getragenen Gangwahlschalter zum Einstellen einer Fahrstufe auf. Der Gangwahlschalter umfasst ein Drehelement, das derart ausgeführt und angeordnet ist, dass es zum Einstellen einer Fahrstufe um eine Drehachse (Schwenkachse, Kippachse) drehbar (schwenkbar, kippbar) ist, die im Wesentlichen parallel zur Fahrzeugquerachse (Nickachse) ist.

Dadurch wird ein Kraftfahrzeug geschaffen, bei dem das Einlegen einer Fahrstufe komfortabel möglich ist. Außerdem wird durch die Ausrichtung der Drehachse parallel zur Fahrzeugquerachse die Möglichkeit einer besonders intuitiven Bedienung des Gangwahlschalters geschaffen. Die Anordnung des Gangwahlschalters an der Lenksäule ist außerdem besonders bauraumsparend. Zudem ergeben sich aus der Erfindung ergonomische Vorteile: Der Gangwahlschalter ist gut sichtbar und die für die Bedienung erforderliche Drehbewegung korrespondiert mit dem Hand-Arm-System des Nutzers.

Vorzugsweise ist der Gangwahlschalter derart mit einem Antrieb, insbesondere einem Getriebe, einem Automatikgetriebe oder einem Elektromotor, des Kraftfahrzeuges gekoppelt, dass die auf das Drehelement angewendete Bedienrichtung zum Einstellen einer Fahrstufe der Fahrrichtung der eingestellten Fahrstufe entspricht. Um beispielsweise die Fahrstufe "D" (Fahren nach vorne) einzulegen, wird das Drehelement, insbesondere ein über der Drehachse liegender Teil des Drehelementes, nach vorne gedreht oder gekippt. Um dagegen beispielsweise die Fahrstufe "R" (Rückwärtsfahren) einzulegen, wird das Drehelement, insbesondere ein über der Drehachse liegender Teil des Drehelementes, nach hinten gedreht oder gekippt. Dadurch ist der Gangwahlschalter besonders intuitiv bedienbar. Außerdem können dadurch gesetzgeberische Vorschriften für Gangwahlschalter eingehalten werden, ohne Bediengewohnheiten zu widersprechen. Die Bediensicherheit wird erhöht.

Es ist eine Weiterbildung der Erfindung, dass der Gangwahlschalter derart mit einem Antrieb, insbesondere einem Getriebe, einem Automatikgetriebe oder einem Elektromotor, des Kraftfahrzeuges gekoppelt ist, dass die auf das Drehelement angewendete Drehrichtung zum Einstellen einer Fahrstufe der Drehrichtung von Rädern des Kraftfahrzeuges in der eingestellten Fahrstufe entspricht.

Vorzugsweise ist der Gangwahlschalter derart mit einem Antrieb gekoppelt, dass durch die Drehung des Drehelementes in eine erste Drehrichtung das Einstellen einer Fahrstufe bewirkt wird, in welcher sich die Räder des Kraftfahrzeuges in die erste Drehrichtung drehen (zumindest dann wenn das Fahrzeug in dieser Fahrstufe bestimmungsgemäß geradeaus bewegt wird).

Vorzugsweise ist der Gangwahlschalter derart mit einem Antrieb gekoppelt, dass durch die Drehung des Drehelementes in eine zweite Drehrichtung das Einstellen einer Fahrstufe bewirkt wird, in welcher sich die Räder des Kraftfahrzeuges in die zweite Drehrichtung drehen.

Es ist eine Weiterbildung der Erfindung, das Drehelement derart monostabil zu lagern, dass es ausgehend von der monostabilen Lage in zwei Drehrichtungen drehbar ist. Ausgehend von der monostabilen Lage ist das Drehelement vorzugsweise in die erste und/oder zweite Drehrichtung drehbar, um jeweils (in Drehrichtung) zwei aufeinander folgende Schaltpositionen zu erreichen, die jeweils mit einem mechanischen Widerstand gekoppelt sind, der einer weiteren Drehung in die Drehrichtung entgegen wirkt (diese aber nicht verhindert). Den Schaltpositionen ist abhängig von der aktuell eingelegten Fahrstufe jeweils eine Fahrstufe zugeordnet oder nicht.

Es ist eine Weiterbildung der Erfindung, dass der Gangwahlschalter einen Taster umfasst, bei dessen Betätigung das Einlegen der Fahrstufe "P" bewirkt wird. Vorzugsweise ist ein Einlegen der Fahrstufe "P" dabei nicht durch eine Drehung des Drehelementes zu bewirken.

Es ist eine Weiterbildung der Erfindung, dass der Gangwahlschalter ein drehfest mit der Lenksäule verbundenes Basiselement umfasst, durch welches das Drehelement getragen wird. Das Basiselement kann dabei auch ein Teil der Lenksäulenverkleidung sein. Das Basiselement umfasst vorzugsweise eine Anzeigeeinrichtung, durch welche das Schaltschema, die aktuell eingelegte Fahrstufe und/oder mögliche Drehrichtungen (Drehrichtungssymbole) angezeigt werden, entsprechend welchen ausgehend von der aktuell eingelegten Fahrstufe eine Drehung des Drehelementes erforderlich ist, um das Einlegen einer Fahrstufe zu bewirken.

Dadurch wird das Einlegen einer Fahrstufe weiter erleichtert.

Im Folgenden wird die Erfindung anhand von Beispielen unter Bezugnahme auf die folgende Figur näher erläutert:

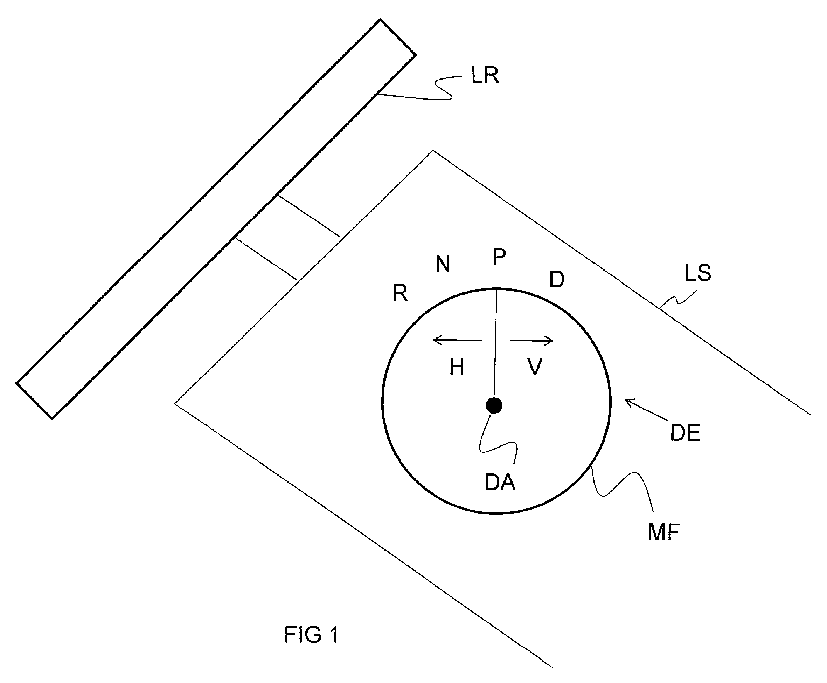

- Figur 1: zeigt eine schematische Prinzipdarstellung einer Lenksäule in Seitenansicht samt Gangwahlschalter.

In Figur 1 ist von dem Gangwahlschalter das Drehelement DE, das von der Lenksäule LS getragen wird, sichtbar. Durch die Lenksäule LS wird auch das Lenkrad LR getragen. Das Drehelement DE kann beispielsweise im Wesentlichen konisch oder zylindrisch ausgeführt sein.

Das Drehelement DE ist um eine Drehachse DA drehbar gelagert, die im Wesentlichen (beispielsweise mit einer Abweichung kleiner +- 10 Grad oder kleiner +- 20 Grad oder kleiner +- 30 Grad) parallel zur Fahrzeugquerachse ausgerichtet ist.

Der Gangwahlschalter, insbesondere das Drehelement DE, ist derart mit dem Antrieb des Kraftfahrzeuges gekoppelt, dass durch die Drehung des Drehelementes DE in eine erste Drehrichtung (V, nach vorne) das Einstellen einer Fahrstufe D bewirkt wird, in welcher sich Räder des Kraftfahrzeuges in die erste Drehrichtung (D, Vorwärtsfahren) drehen. Durch die Drehung des Drehelementes in eine zweite Drehrichtung (H, nach hinten) wird das Einstellen einer Fahrstufe R bewirkt, in welcher sich Räder des Kraftfahrzeuges in die zweite Drehrichtung (R, Rückwärts) drehen. Dies gilt insbesondere ausgehend von einer Fahrstufe P (Parken).

Um von einer beliebigen Fahrstufe in die Fahrstufe P zu schalten, ist ein Tastelement (nicht dargestellt) an dem Gangwahlschalter vorgesehen. Dieses kann durch das Drehelement DE (vorzugsweise auf dessen Stirnfläche SF), ein das Drehelement DE tragendes Basiselement (nicht dargestellt) oder die Lenksäule LS getragen werden.

Die Fahrstufen, die aktuell eingelegte Fahrstufe und die Bedienaktionen, die aktuell erforderlich sind, um von der aktuellen Fahrstufe jeweils zu den anderen Fahrstufen zu kommen, werden einem Nutzer anhand einer Anzeigeeinrichtung (nicht dargestellt) vermittelt. Diese kann durch das Drehelement DE, ein das Drehelement DE tragendes Basiselement (nicht dargestellt) oder die Lenksäule LS getragen werden. Die Anzeigeeinrichtung ist vorzugsweise auf der Mantelfläche MF des Drehelementes DE derart angeordnet, dass es durch das Lenkradinnere hindurch sichtbar ist.

Die Bedienaktionen repräsentierende Symbole (Dreiecke oder Pfeile) werden vorzugsweise nur dann angezeigt, wenn die Voraussetzungen zum Einlegen der jeweiligen Fahrstufe erfüllt sind. Beispielsweise werden bei aktuell eingelegter Fahrstufe P die nach vorne (zum Einlegen der Fahrstufe D) und hinten (zum Einlegen der Fahrstufe R) zeigenden Dreiecke oder Pfeile nur dann angezeigt, wenn die Fußbremse getreten ist.

Auch weitere Bedienelemente, beispielsweise zum Bedienen eines Parkkontrollsystems, eines Fahrdynamikregelsystems, eines Fahrmoduswahlsystems, eines Motor-Start-Stop-Systems, eines Reichweitenverbesserungssystems usw. können durch das Drehelement DE, ein das Drehelement DE tragendes Basiselement (nicht dargestellt) oder die Lenksäule LS getragen werden.

Das Drehelement DE ist hinsichtlich der zwei Drehrichtungen monostabil gelagert. Ausgehend von der monostabilen Lage des Drehelementes DE können durch Drehung in die erste und zweite Drehrichtung jeweils zwei aufeinander folgende Schaltpositionen erreicht werden, die jeweils mit einem mechanischen Widerstand (Druckpunkt) gekoppelt sind, der einer weiteren Drehung in die Drehrichtung entgegen wirkt, diese aber nicht verhindert. Abhängig von der aktuell eingelegten Fahrstufe sind den Schaltpositionen entweder jeweils eine Fahrstufe zugeordnet oder nicht.

Beispielsweise ist ausgehend von der Fahrstufe P oder N der ersten Schaltposition in Drehrichtung "nach vorne" die Fahrstufe D zugeordnet, der zweiten Schaltposition dagegen keine Fahrstufe zugeordnet. Ausgehend von der Fahrstufe R ist der ersten Schaltposition in Drehrichtung "nach vorne" die Fahrstufe N zugeordnet, der zweiten Schaltposition dagegen die Fahrstufe D zugeordnet. Ausgehend von der Fahrstufe R bewirkt das Drehen des Drehelementes DE nach vorne in die zweite Schaltposition das Einlegen der Fahrstufe D. Ausgehend von der Fahrstufe R bewirkt das Drehen des Drehelementes DE nach vorne in die erste Schaltposition das Einlegen der Fahrstufe N. Ausgehend von der Fahrstufe N bewirkt das Drehen des Drehelementes DE nach vorne in die erste Schaltposition das Einlegen der Fahrstufe D. Ausgehend von der Fahrstufe N bewirkt das Drehen des Drehelementes DE nach vorne in die zweite Schaltposition das Einlegen der Fahrstufe D (entspricht einer Drehung in die erste Schaltposition; der zweiten Schaltposition ist in diesem Fall gar keine Fahrstufe zugeordnet).

## Patentansprüche

1. Kraftfahrzeug
mit einer Lenksäule und
mit einem durch die Lenksäule getragenen Gangwahlschalter zum Einstellen einer Fahrstufe,
wobei der Gangwahlschalter ein Drehelement umfasst, das derart ausgeführt und angeordnet ist, dass es zum Einstellen einer Fahrstufe um eine Drehachse drehbar ist, die im Wesentlichen parallel zur Fahrzeugquerachse ist, **dadurch gekennzeichnet, daß**
der Gangwahlschalter derart mit einem Antrieb gekoppelt ist,
- dass ausgehend von einer Fahrstufe "P" durch eine Drehung des Drehelementes in eine erste Drehrichtung das Einstellen einer Fahrstufe bewirkt wird, in welcher sich Räder des Kraftfahrzeuges in die erste Drehrichtung drehen, und
- dass ausgehend von einer Fahrstufe "P" durch eine Drehung des Drehelementes in eine zweite Drehrichtung das Einstellen einer Fahrstufe bewirkt wird, in welcher sich Räder des Kraftfahrzeuges in die zweite Drehrichtung drehen.

2. Kraftfahrzeug nach Anspruch 1,
bei dem der Gangwahlschalter derart mit einem Antrieb gekoppelt ist, dass die auf das Drehelement angewendete Bedienrichtung zum Einstellen einer Fahrstufe der Fahrrichtung der eingestellten Fahrstufe entspricht.

3. Kraftfahrzeug nach einem der vorhergehenden Ansprüche,
bei dem der Gangwahlschalter derart mit einem Antrieb gekoppelt ist, dass die auf das Drehelement angewendete Drehrichtung zum Einstellen einer Fahrstufe der Drehrichtung von Rädern des Kraftfahrzeuges in der eingestellten Fahrstufe entspricht.

4. Kraftfahrzeug nach einem der vorhergehenden Ansprüche, bei dem das Drehelement derart monostabil gelagert ist, dass es ausgehend von der monostabilen Lage in zwei Drehrichtungen drehbar ist.

5. Kraftfahrzeug nach einem der vorhergehenden Ansprüche, bei dem das Drehelement ausgehend von der monostabilen Lage in die erste und/oder zweite Drehrichtung drehbar ist, um jeweils zwei aufeinander folgende Schaltpositionen zu erreichen, die jeweils mit einem mechanischen Widerstand gekoppelt sind, der einer weiteren Drehung in die Drehrichtung entgegen wirkt.

6. Kraftfahrzeug nach einem der vorhergehenden Ansprüche, bei dem der Gangwahlschalter einen Taster umfasst, bei dessen Betätigung das Einlegen der Fahrstufe "P" bewirkt wird.

7. Kraftfahrzeug nach einem der vorhergehenden Ansprüche, bei dem der Gangwahlschalter ein drehfest mit der Lenksäule verbundenes Basiselement umfasst, durch welches das Drehelement getragen wird.

8. Kraftfahrzeug nach einem der vorhergehenden Ansprüche, bei dem das Basiselement eine Anzeigeeinrichtung umfasst, durch welche das Schaltschema, die aktuell eingelegte Fahrstufe und/oder Drehrichtungen angezeigt werden, entsprechend welchen ausgehend von der aktuell eingelegten Fahrstufe eine Drehung des Drehelementes erforderlich ist, um das Einlegen einer Fahrstufe zu bewirken.

## Claims

1. A motor vehicle comprising
a steering column and
a gear selection switch borne by the column for engaging a gear, wherein the gear selection switch comprises a rotary element designed and disposed so as to be rotatable in order to engage a gear, the rotation being round an axis substantially parallel to the transverse axis of the vehicle, **characterised in that** the switch is connected to a drive so that, starting from a gear "P",
- the rotary element can engage a gear by rotating in a first direction in which the wheels of the vehicle rotate in the first direction, and
- starting from a gear "P", the rotary element can rotate for engaging a gear in a second direction, in which the wheels of the vehicle rotate in the second direction.

2. A vehicle according to claim 1,
wherein the gear selection switch is so coupled to a drive that the direction of operation applied to the rotary element corresponds to engaging a gear in the direction of travel of the engaged gear.

3. A vehicle according to any of the preceding claims,
wherein the gear selection switch is so coupled to a drive that the direction of rotation applied to the rotary element corresponds to engaging a gear in the direction of rotation of vehicle wheels in the engaged gear.

4. A vehicle according to any of the preceding claims,
wherein the rotary element is mounted in monostable manner so that starting from the monostable position it is rotatable in two directions.

5. A vehicle according to any of the preceding claims,
wherein the rotary element, starting from the monostable position, is rotatable in the first and/or second direction in order in each case to reach two successive gear positions each coupled to a respective mechanical resistor which counteracts further rotation in the said direction.

6. A vehicle according to any of the preceding claims,
wherein the gear selection switch comprises a sensor which when actuated engages the gear "P".

7. A vehicle according to any of the preceding claims,
wherein the gear selection switch comprises a base element co-rotatable with the steering column and bearing the rotary element.

8. A vehicle according to any of the preceding claims,
wherein the base element comprises an indicator which displays the circuit diagram, the gear engaged at that moment, and/or directions of rotation, starting from which and from the gear engaged at that moment, the rotary element must be rotated in order to engage a gear.

## Revendications

1. Véhicule automobile comprenant :
une colonne de direction, et
un sélecteur de vitesse porté par la colonne de direction pour permettre le réglage d'un rapport de vitesse, le sélecteur de vitesse comprenant un élément rotatif qui est conformé et monté de façon à être mobile en rotation pour permettre le réglage d'un rapport de vitesse autour d'un axe de rotation qui est essentiellement parallèle à l'axe transversal du véhicule,
**caractérisé en ce que**
le sélecteur de vitesse est couplé à un organe d'entrainement de sorte que :
- à partir d'un rapport de vitesse P la rotation de l'élément rotatif dans un premier sens de rotation provoque le réglage d'un rapport de vitesse dans lequel les roues du véhicule tournent dans un premier sens de rotation, et
- à partir d'un rapport de vitesse P la rotation de l'élément rotatif dans un second sens de rotation provoque le réglage d'un rapport de vitesse dans lequel les roues du véhicule tournent dans le second sens de rotation.

2. Véhicule automobile conforme à la revendication 1, dans lequel le sélecteur de vitesse est couplé à un organe d'entrainement de sorte que la direction de commande, appliquée à l'élément rotatif pour régler un rapport de vitesse, corresponde au sens de déplacement du rapport de vitesse réglé.

3. Véhicule automobile conforme à l'une des revendications précédentes, dans lequel le sélecteur de vitesse est couplé à un organe d'entrainement de sorte que le sens de rotation appliqué à l'élément rotatif, pour régler un rapport de vitesse, corresponde au sens de rotation des roues du véhicule dans le rapport de vitesse réglé.

4. Véhicule automobile conforme à l'une des revendications précédentes, dans lequel l'élément rotatif est monté monostable de sorte qu'à partir de la position monostable il puisse être déplacé en rotation dans deux sens de rotation.

5. Véhicule automobile conforme à l'une des revendications précédentes, dans lequel à partir de la position monostable l'élément rotatif peut être déplacé en rotation dans le premier et/ou le second sens de rotation pour obtenir respectivement deux positions de commutation successives qui sont respectivement couplées à une résistance mécanique qui s'oppose à une poursuite de la rotation dans le sens de rotation.

6. Véhicule automobile conforme à l'une des revendications précédentes, dans lequel le sélecteur de vitesse comprend un palpeur dont l'actionnement entraine l'enclenchement du rapport de vitesse P.

7. Véhicule automobile conforme à l'une des revendications précédentes, dans lequel le sélecteur de vitesse comprend un élément de base relié solidairement en rotation à la colonne de direction qui porte l'élément rotatif.

8. Véhicule automobile conforme à l'une des revendications précédentes, dans lequel l'élément de base comprend un dispositif indicateur par lequel sont indiqués le schéma de commutation, le rapport de vitesse actuellement enclenché et/ou les sens de rotation, conformément auxquels à partir du rapport de vitesse actuellement enclenché une rotation de l'élément rotatif est nécessaire pour permettre d'obtenir l'enclenchement d'un rapport de vitesse.
